# EUROPEAN PATENT APPLICATION

(11) **EP 4 579 911 A1**
(43) Date of publication of application: **02.07.2025**
(21) Application number: 23900927.7
(22) Date of filing: 10.11.2023
(51) Int. Cl.: H01M 50/242, H01M 50/249, H01M 50/204, H01M 50/124, H01M 50/24

(54) **BATTERY MODULE, AND BATTERY PACK AND VEHICLE COMPRISING SAME**

(30) Priority: 05.12.2022 KR 20220167707; 31.03.2023 KR 20230043169
(71) Applicant: LG Energy Solution, Ltd., Seoul 07335 (KR)
(72) Inventor: HAN, Min-Hee, Daejeon 34122 (KR); KIM, Soo-Youl, Daejeon 34122 (KR); PARK, Ju-Hun, Daejeon 34122 (KR); CHOI, Wan-Sup, Daejeon 34122 (KR); JUNG, Hye-Mi, Daejeon 34122 (KR)
(74) Representative: Plasseraud IP
(86) International application number: PCT/KR2023/018110
(87) International publication number: WO 2024/122908

(57) **Abstract**

The present disclosure discloses a battery module with enhanced safety. A battery module according to an aspect of the disclosure includes a cell stack including: a plurality of battery cells stacked in at least one direction; and a module case configured to accommodate the cell stack, wherein the at least one of the plurality of battery cells includes a coating layer on the surface thereof.

## Description

### TECHNICAL FIELD

The present disclosure relates to a battery module, and a battery pack and a vehicle including the same, and more specifically, it relates to a battery module with enhanced safety, and a battery pack and a vehicle including the same.

The present application claims priority to Korean Patent Application No. 10-2022-0167707 filed on December 05, 2022 and Korean Patent Application No. 10-2023-0043169 filed on March 31, 2023 in the Republic of Korea, the disclosures of which are incorporated herein by reference.

### BACKGROUND ART

As the demand for portable electronic products such as laptops, video cameras, mobile phones, and the like is rapidly increasing and as robots, electric vehicles, and the like are widely commercialized, active research on high-performance secondary batteries capable of being repeatedly charged and discharged is underway.

Currently commercialized secondary batteries include nickel-cadmium batteries, nickel-hydrogen batteries, nickel-zinc batteries, lithium secondary batteries, and the like, and among them, lithium secondary batteries are in the spotlight for their advantages of free charging and discharging due to almost no memory effect, a very low self-discharge rate, and a high energy density, compared to nickel-based secondary batteries.

These lithium secondary batteries mainly use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween, and an exterior case, i.e., a battery case, that seals and stores the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving and storing energy, such as electric vehicles and energy storage systems (ESSs), as well as in small devices such as portable electronic devices. In this case, a battery module may be configured such that multiple secondary batteries electrically connected to each other are stored inside a module case. In addition, a plurality of battery modules described above may be connected to each other to configure a battery pack.

However, since the multiple battery cells or multiple battery modules described above are densely disposed in a narrow space, they may be vulnerable to an thermal event. In particular, when a thermal event occurs in any one battery cell, heat, flame, sparks, and the like may be generated. If this heat or the like is transferred to another battery cell, an explosive chain reaction such as thermal propagation (TP) may occur, which may lead to explosion or ignition in the battery module.

Moreover, medium and large battery packs used in electric vehicles or the like include a large number of battery cells and battery modules to increase output and/or capacity, and there may be users such as drivers nearby, so that the risk of a thermal chain reaction may increase more.

Therefore, a method is required to delay heat transfer to other battery cells or battery modules when a thermal event occurs in a specific battery cell or battery module, thereby improving safety.

### DISCLOSURE

### Technical Problem

The present disclosure has been designed to solve the problems of the related art, and therefore the present disclosure is directed to providing a battery module capable of improving safety through a delay of heat transfer or the like, and a battery pack and a vehicle including the same.

The present disclosure also provides a battery pack with improved stability by including such a battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a cell stack including a plurality of battery cells stacked in at least one direction; and a module case configured to accommodate the cell stack.

The at least one of the plurality of battery cells may have a coating layer on the surface thereof.

The coating layer may be coated on the entire surface of the battery cell.

The coating layer may be provided on the surfaces of all battery cells included in the cell stack.

The cell stack may include a swelling absorption pad disposed between the plurality of battery cells.

Two battery cells positioned on both sides of the swelling absorption pad may include the coating layers provided at positions corresponding to each other.

The coating layer may be a fire-resistant coating layer.

The coating layer may include a silica material.

The swelling absorption pad may be disposed in every space between adjacent battery cells.

The swelling absorption pad may be a thermal pad with elasticity and heat resistance.

The swelling absorption pad may include silicon.

The swelling absorption pad may have an area greater than the surface of the battery cell facing the swelling absorption pad.

A battery pack according to the present disclosure may include the battery module according to the present disclosure.

A vehicle according to the present disclosure may include the battery pack according to the present disclosure.

### Advantageous Effects

According to one aspect of the present disclosure, the swelling absorption pad is able to absorb or suppress the pressure generated by swelling of the battery cell. Acceleration of thermal runaway caused by swelling may be prevented. It is possible to delay or prevent a thermal chain reaction in which flame and/or heat generated due to a thermal event occurring in a specific battery cell transfer to other adjacent battery cells.

In particular, although pouch-type secondary batteries may be more vulnerable to flame and/or heat, compared to can-type batteries, due to the nature of the exterior case, a coating layer may be formed on the surface of the pouch exterior case according to the present disclosure, thereby enhancing the effects of delaying or preventing the above thermal chain reaction.

According to another aspect of the present disclosure, the swelling absorption pad is able to more effectively absorb or suppress the pressure generated by swelling of the battery cell. This is due to the fact that the swelling absorption pad is accommodated in the accommodation portions of the module case and the bus-bar frame and then stably fixed.

### DESCRIPTION OF DRAWINGS

FIG. 1 is a diagram illustrating the appearance of a battery module according to the present disclosure.
FIG. 2 is an exploded perspective view of a battery module according to the present disclosure.
FIG. 3 is a diagram illustrating a battery cell included in the battery module according to the present disclosure.
FIG. 4 is a diagram illustrating an exemplary cross-section taken along line B-B' in FIG. 3.
FIG. 5 is a diagram illustrating a swelling absorption pad included in a battery module and two battery cells positioned on both sides thereof according to the present disclosure.
FIGS. 6 and 7 are diagrams illustrating exemplary cross-sections taken along line A-A' in FIG. 1.
FIG. 8 is a diagram illustrating a bus-bar assembly included in a battery module according to the present disclosure.
FIG. 9 is a diagram illustrating a battery pack according to the present disclosure.
FIG. 10 is a diagram illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention below, serve to provide further understanding of the technical idea of the present disclosure, and thus, the present disclosure is not construed as being limited to the drawings. The same reference numerals indicate the same elements. In addition, in the drawings, the thickness, proportions, and dimensions of elements are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as upward, downward, left, right, forward, and backward are used in this specification, it is obvious to those skilled in the art that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

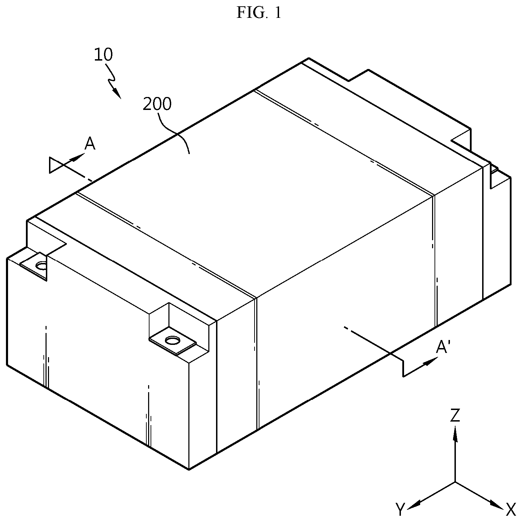

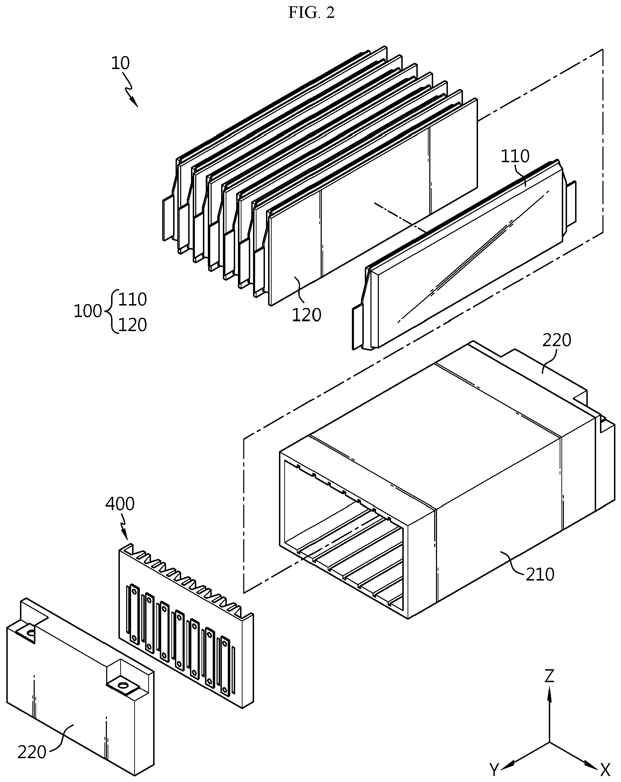

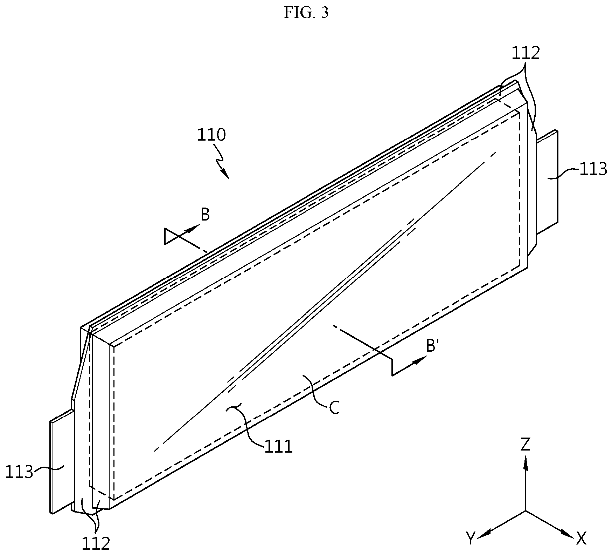

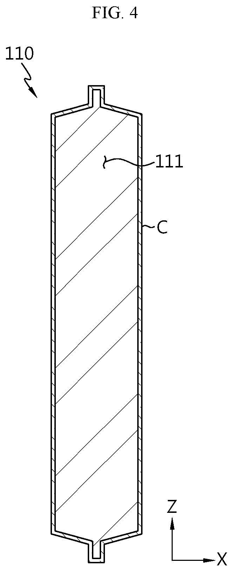

FIG. 1 is a diagram illustrating the appearance of a battery module according to the present disclosure. FIG. 2 is an exploded perspective view of a battery module according to the present disclosure. FIG. 3 is a diagram illustrating a battery cell included in the battery module according to the present disclosure. FIG. 4 is a diagram illustrating an exemplary cross-section taken along line B-B' in FIG. 3.

Referring to FIGS. 1 to 4, the battery module 10 according to the present disclosure may include a cell stack 100 and a module case 200.

The cell stack 100 may include a plurality of battery cell 110 stacked in at least one direction.

Each of the battery cells 110 may be the secondary battery. The battery cell 110 may include an electrode assembly, an electrode lead 113 connected to the electrode assembly, and the battery case that is sealed such that the electrode assembly is accommodated therein and such that the electrode lead 113 extends to the outside thereof. An electrolyte may be accommodated inside the battery case. In particular, the battery cell 110 provided in the cell stack 100 may be a pouch-type secondary battery. The cell stack 100 may be configured such that a plurality of pouch-type secondary batteries is arranged side by side in the horizontal direction while their wide surfaces face each other in an upright state.

At least one of the plurality of battery cell 110 may have a coating layer C formed on the surface thereof. The coating layer C may be coated on the entire surface of the battery cell 110. The coating layer C may be provided on the surface of each of all the battery cell 110.

The battery case may include an accommodation portion 111 accommodating the electrode assembly and a sealing portion 112 configured to extend outwards from the perimeter of the accommodation portion 111 so as to seal the accommodation portion 111. The coating layer C may be provided on the entirety of the remaining surface of the battery cell 110, excluding the electrode lead 113. That is, the coating layer C may be configured to cover both the accommodation portion 111 and the sealing portion 112 of the pouch case. As described above, if the coating layer C is provided on the entire area of the battery cell 110, excluding the electrode lead 113 for electrical connection, the fire resistance of the battery cell 110 may be improved without affecting the electrical connection.

In another aspect, the coating layer C may also be provided on the portion of the electrode lead 113. The coating layer C may be configured to cover the remaining area of the electrode lead 113, excluding the area that is to be coupled to other components (e.g., components such as a bus-bar, an electrode lead of an adjacent battery cell, terminals, and the like). In this case, the fire resistance of the battery cell 110 may be further improved. However, the present disclosure is not limited thereto, and the coating layer C may be provided only in the accommodation portion 111 of the pouch case.

The coating layer C may be formed by applying paint to the surface of the battery cell 110 in a spraying method. However, in addition thereto, the coating layer C may be provided on the surface of the battery cell 110 in various other ways.

The coating layer C may be a fire-resistant coating layer C. The coating layer C may include a silica material. The coating layer C may include an alumina material. The coating layer C may include a magnesia material.

The swelling absorption pad 120 may be disposed between the plurality of battery cell 110. The swelling absorption pad 120 may be disposed between two adjacent battery cell 110. The swelling absorption pad 120 may be disposed between every two adjacent battery cells 110. The swelling absorption pad 120 may be configured in a plate shape.

The swelling absorption pad 120 may include an elastic material. The swelling absorption pad 120 may include a heat-resistant material capable of withstanding flame or heat at a predetermined level or more. The swelling absorption pad 120 may include a polyurethane material. The swelling absorption pad 120 may include a silicone material.

According to this configuration of the present disclosure, the swelling absorption pad 120 may absorb or suppress the pressure generated by swelling of the battery cell 110. In another aspect, according to this configuration of the present disclosure, it is possible to prevent a problem with acceleration of thermal runaway caused by the swelling. In another aspect, according to this configuration of the present disclosure, the thermal chain reaction in which the flame and/or heat generated by a thermal event occurring in a specific battery cell 110 transfer to other adjacent battery cells 110 may be delayed or prevented.

In particular, although the pouch-type secondary battery may be relatively vulnerable to flame and/or heat, compared to the can-type battery, due to the nature of the exterior case, the coating layer C according to the present disclosure may be formed on the surface of the exterior case of the pouch, thereby delaying or preventing the above-mentioned thermal chain reaction.

The module case 200 may be configured to accommodate the cell stack 100. The module case 200 may be configured to have an accommodation space capable of accommodating the cell stack 100. The module case 200 may include a case body 210 comprised of four covers constituting respective surfaces substantially in the shape of a square pillar, and a pair of end cover 220 for covering the front and back faces of the cell stack 100.

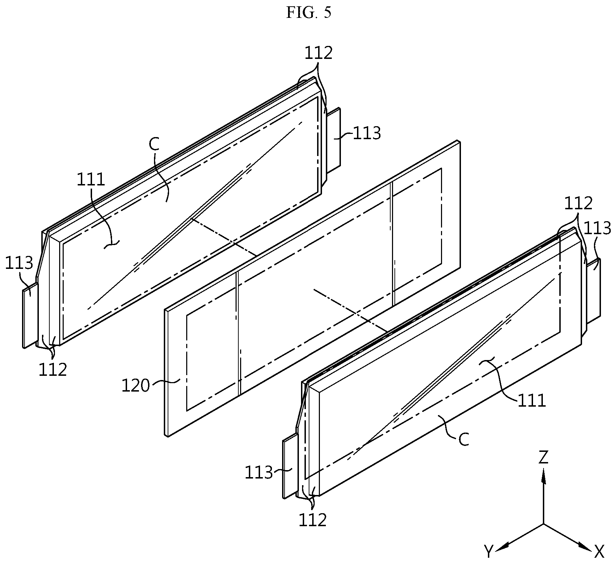

FIG. 5 is a diagram illustrating a swelling absorption pad included in a battery module and two battery cells positioned on both sides thereof according to the present disclosure.

Referring to FIG. 5, the two battery cells 110 positioned on both sides of the swelling absorption pad 120 may have coating layers C, respectively, on the surfaces facing each other.

Referring to FIG. 5, the swelling absorption pad 120 may have a larger area than the surface of the battery cell 110 that faces the swelling absorption pad 120.

If a battery case provided in the battery cell 110 includes an accommodation portion 111 that accommodates the electrode assembly and a sealing portion 112 that seals the accommodation portion 111, the two battery cells 110 positioned on both sides of the swelling absorption pad 120 may have coating layers C on the area corresponding to the accommodation portion 111. The swelling absorption pad 120 may have a larger area than the accommodation portion 111 corresponding thereto. The swelling absorption pad 120 may be configured to cover the entire accommodation portion 111.

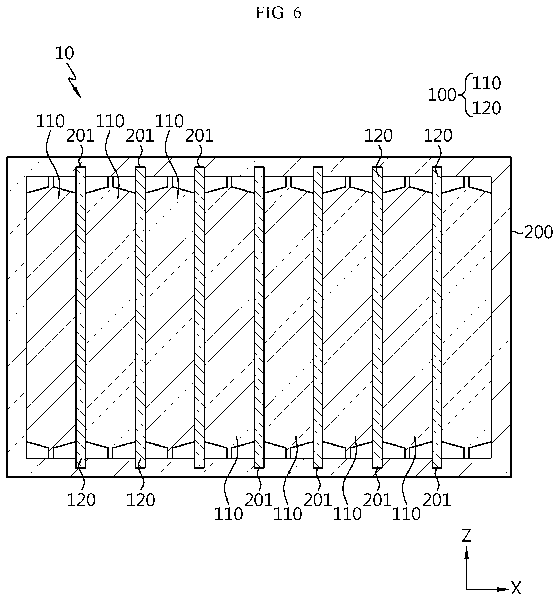

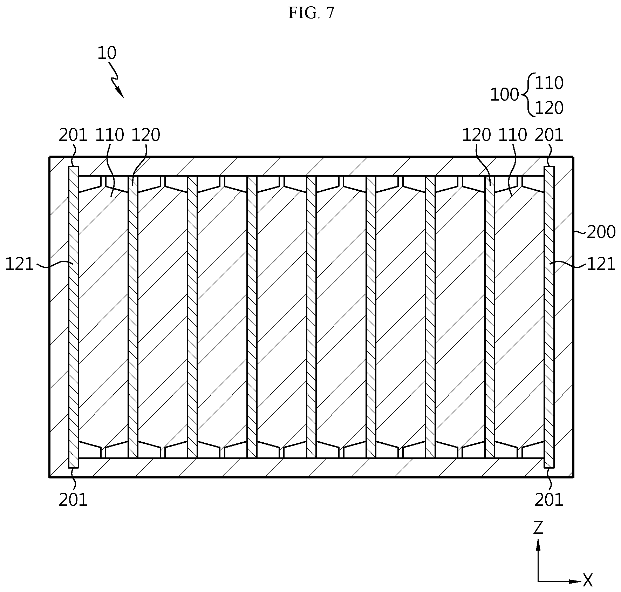

FIGS. 6 and 7 are diagrams illustrating exemplary cross-sections taken along line A-A' in FIG. 1.

Referring to FIGS. 6 and 7, the module case 200 may have a first accommodation portion 201 in which the swelling absorption pad 120 is accommodated. The module case 200 may have the first accommodation portion 201 on the inner surface of the case body 210.

Referring to FIG. 6, the first accommodation portion 201 may be provided at the position corresponding to the swelling absorption pad 120. The first accommodation portion 201 may be provided on the inner surface of at least one of the upper and lower portions of the module case 200. The first accommodation portion 201 may be configured in the form of a groove extending substantially in a straight line from one end of the module case 200 to the other end. The first accommodation portion 201 may be provided to correspond to the number of swelling absorption pad 120.

According to this configuration of the present disclosure, the swelling absorption pad 120 may more effectively absorb or suppress the pressure generated by swelling of the battery cell 110. This is due to the fact that the swelling absorption pad 120 is accommodated in the first accommodation portion 201 of the module case 200 and fixed stably. In another aspect, according to this configuration, the thermal propagation between adjacent battery cells 110 may be prevented more effectively. This is due to the fact that an empty space is prevented from being formed between the swelling absorption pad 120 and the inner surface of the module housing 200.

In addition, referring to FIG. 2 as well, when storing the assembly of the cell stack 100 and the swelling absorption pad 120 inside the module case 200, a portion of the swelling absorption pad 120 may be preferentially received in one end of the first accommodation portion 201 and then pushed toward the other end, so that the entirety of the assembly may slide to be accommodated therein.

Referring to FIG. 7, the battery module 10 may include a supplementary swelling absorption pad 121 disposed between the cell stack 100 and the module case 200. The battery module 10 may include two supplementary swelling absorption pads 121 between the left face of the cell stack 100 (in the -X-axis direction) and the left inner surface of the module case 200 (in the -X-axis direction), and between the right face of the cell stack 100 (in the X-axis direction) and the right inner surface of the module case 200 (in the X-axis direction), respectively. The module case 200 may have a second accommodation portion 202 in which the supplementary swelling absorption pad 121 is accommodated. The second accommodation portion 202 may be provided at the position corresponding to the supplementary swelling absorption pad 121. In this case, the first accommodation portion 201 may be provided selectively.

According to this configuration of the present disclosure, the supplementary swelling absorption pad 121 may delay or prevent a thermal chain reaction in which the flame and/or heat generated by the thermal runaway occurring in the battery cell 110 transfer to the module case 200. Referring to FIG. 2 as well, when storing the assembly of the cell stack 100, the swelling absorption pad 120, and the supplementary swelling absorption pad 121 stacked on each other inside the module case 200, a portion of the supplementary swelling absorption pad 121 may be preferentially received in one end of the second accommodation portion 202 and then pushed toward the other end, so that the entirety of the assembly may slide to be accommodated therein.

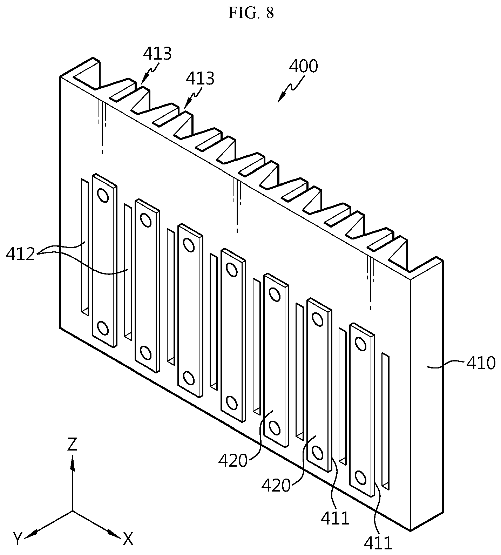

FIG. 8 is a diagram illustrating a bus-bar assembly 400 included in a battery module 10 according to the present disclosure.

Referring to FIG. 8, the battery module 10 may include a bus-bar assembly 400.

The bus-bar assembly 400 may include a bus-bar 420 that electrically connects a plurality of battery cell 110 and a bus-bar frame 410 on which the bus-bar 420 is seated.

The bus-bar frame 410 may have a bus-bar seating portion 411, an electrode lead accommodation portion 412 in which the electrode lead 113 is accommodated, and a third accommodation portion 413.

Referring to FIG. 2 together, the third accommodation portion 413 may receive one end of the swelling absorption pad 120 in the longitudinal direction thereof (the Y-axis direction). The third accommodation portion 413 may be a groove that extends in the height direction (the Z-axis direction) of the bus-bar frame 410. The third accommodation portion 413 may be provided on the inner surface of the bus-bar frame 410. The third accommodation portion 413 may be configured in the form of a groove recessed in the +Y-axis direction from the substantially flat inner surface of the bus-bar frame 410 so as to correspond to the shape of the swelling absorption pad 120. The third accommodation portion 413 may be configured in the form of a groove recessed in the +Y-axis direction from the protruding portion formed substantially in a trapezoidal pillar shape on the inner surface of the bus-bar frame so as to correspond to the shape of the swelling absorption pad 120. However, the third accommodation portion 413 may be configured in the form of a hole passing through the swelling absorption pad 120, as well as the groove.

According to this configuration of the present disclosure, the swelling absorption pad 120 may be fixed more stably by the third accommodation portion 413 of the bus-bar frame 410, as well as the first accommodation portion 201 of the module case 200.

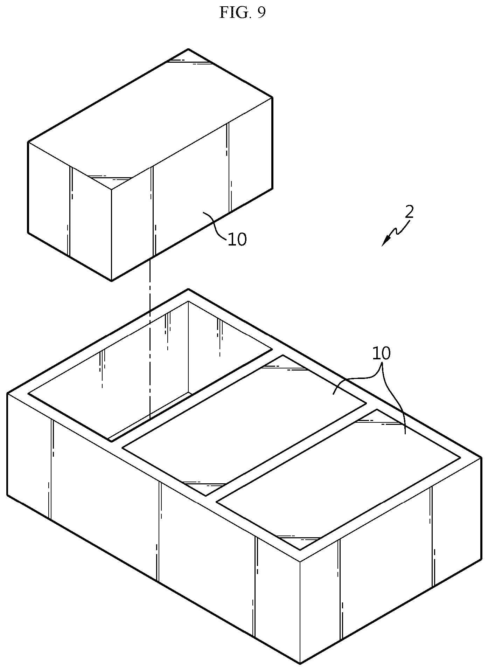

FIG. 9 is a diagram illustrating a battery pack according to the present disclosure.

Referring to FIG. 9, the battery pack 2 may include one or more battery modules 10 according to the present disclosure described above. In addition, the battery pack 2 according to the present disclosure may further include, in addition to the battery module 10, various other elements i.e., elements of various battery packs 2 such as a BMS, a bus-bar, a pack case, a relay, a current sensor, and the like, which are well known at the time of filing the present disclosure.

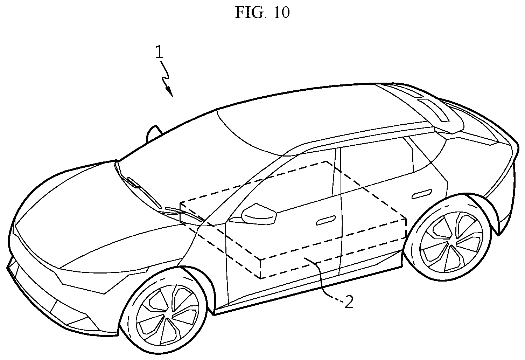

FIG. 10 is a diagram illustrating a vehicle according to the present disclosure.

Referring to FIG. 10, the vehicle 1 may include one or more battery packs 2 according to the present disclosure described above. In addition, the vehicle 1 according to the present disclosure may further include various other elements included in the vehicle 1, in addition to the battery packs 2. For example, the vehicle 1 according to the present disclosure may further include a vehicle body, a motor, a control device such as an ECU (electronic control unit), and the like, in addition to the battery pack 2, according to the present disclosure.

As described above, although the present disclosure has been described based on the preferred embodiments with reference to the accompanying drawings, it is obvious to those skilled in the art will that various modified embodiments may be implemented within the technical scope of the present disclosure. Therefore, the scope of the present disclosure should be construed according to the claims described to include various modifications.

### [Description of Reference Numerals]

1: Vehicle
2: Battery pack
10: Battery module
100: Cell stack
110: Battery cell
111: Accommodation portion
112: Sealing portion
113: Electrode lead
120: Swelling absorption pad
121: Supplementary swelling absorption pad
200: Module case
201: First accommodation portion
202: Second accommodation portion
210: Case body
220: End cover
400: Bus-bar assembly
410: Bus-bar frame
411: Bus-bar seating portion
412: Electrode lead accommodation portion
413: Third accommodation portion
420: Bus-bar
Coating layer C

## Claims

1. A battery module comprising:
a cell stack comprising a plurality of battery cells stacked in at least one direction; and
a module case configured to accommodate the cell stack,
wherein the at least one of the plurality of battery cells comprises
a coating layer on the surface thereof.

2. The battery module according to claim 1,
wherein the coating layer is
coated on the entire surface of the battery cell.

3. The battery module according to claim 1,
wherein the coating layer is
provided on the surfaces of all battery cells included in the cell stack.

4. The battery module according to claim 1,
wherein the cell stack comprises
a swelling absorption pad disposed between the plurality of battery cells.

5. The battery module according to claim 4,
wherein two battery cells positioned on both sides of the swelling absorption pad comprise the coating layers provided at positions corresponding to each other.

6. The battery module according to claim 1,
wherein the coating layer is
a fire-resistant coating layer.

7. The battery module according to claim 1,
wherein the coating layer comprises
a silica material.

8. The battery module according to claim 4,
wherein the swelling absorption pad is
disposed in every space between adjacent battery cells.

9. The battery module according to claim 4,
wherein the swelling absorption pad is
a thermal pad with elasticity and heat resistance.

10. The battery module according to claim 4,
wherein the swelling absorption pad comprises
silicon.

11. The battery module according to claim 4,
wherein the swelling absorption pad has
an area greater than the surface of the battery cell facing the swelling absorption pad.

12. A battery pack comprising the battery module according to any one of claims 1 to 11.

13. A vehicle comprising a battery pack according to claim 12.
